# FASCICULE DE BREVET EUROPEEN

(11) **EP 2 582 991 B1**
(45) Date de publication et mention de la délivrance du brevet: **25.02.2015**
(21) Numéro de dépôt: 11735459.7
(22) Date de dépôt: 09.06.2011
(51) Int. Cl.: F16C 1/10, F16H 61/36

(54) **DISPOSITIF D'ACCOUPLEMENT D'UN ELEMENT DE GUIDAGE SOLIDAIRE D'AU MOINS UNE GAINE DE CABLE, DANS UNE PLATINE SUPPORT**
VORRICHTUNG ZUR KOPPLUNG EINES AN MINDESTENS EINEM KABELMANTEL BEFESTIGTEN FÜHRUNGSELEMENTS AN EIN TRÄGERGESTELL
DEVICE FOR COUPLING A GUIDE ELEMENT SECURED TO AT LEAST ONE CABLE SHEATH, IN A SUPPORT MOUNT

(30) Priorité: 17.06.2010 FR 1054795
(43) Date de publication de la demande: 24.04.2013
(73) Titulaire: Dura Automotive Systems SAS, 91570 Bièvres (FR)
(72) Inventeur: PRADIER, Philippe, F-42290 Sorbiers (FR); DHELFT, Jérôme, F-91000 Evry (FR); DESGRAZ, Julien, F-91230 Montgeron (FR)
(74) Mandataire: Thivillier, Patrick
(86) Numéro de dépôt international: PCT/FR2011/051303
(87) Numéro de publication internationale: WO 2011/157925

(56) Documents cités:
- DE-A1-102007 060 538
- FR-A1- 2 927 961
- FR-A1- 2 936 852

## Description

L'invention se rattache au secteur technique des équipements pour véhicules automobiles.

Plus particulièrement, l'invention concerne la fixation des gaines de câbles ou autres, sur une platine support montée au niveau d'une boîte de vitesses ou d'une commande de boîte de vitesses, mécanique notamment, d'un véhicule automobile. Les câbles ou autres peuvent être affectés pour la transmission d'une commande quelconque, par exemple pour la sélection ou le passage des vitesses à partir d'un levier de commande. Généralement, la gaine du câble considéré présente une douille, un embout ou autre élément, destiné à être fixé dans la platine support.

Un ensemble, selon le préambule de la revendication 1, est connu du document DE 10 2007 060 538 A.

Différentes solutions ont été proposées pour réaliser cette fonction.

Dans une forme de réalisation simplifiée, la douille présente une bague montée, avec capacité de coulissement coaxial limité, à l'encontre d'un ressort de rappel. La bague est escamotée par rapport à une gorge que présente la douille en vue d'être engagée dans une échancrure que présente la platine support. Le blocage en position de verrouillage de la douille, dans le fond de la gorge, s'effectue par un bossage semi-circulaire formé d'une manière concentrique au fond de l'échancrure qui est arrondie. La fixation de la douille résulte donc d'un effet de clipage qui est réalisé en fin de course, c'est-à-dire après avoir totalement engagé la douille dans le fond de l'échancrure. On ne peut exclure le fait que le clipage soit mal réalisé en considérant les conditions dans lesquelles travaille l'opérateur qui, généralement, ne peut pas constater visuellement si le clipage est bien réalisé.

Il est également apparu important de pouvoir constater visuellement qu'en sortie de chaîne, la fixation du câble est bien réalisée ou non. Si l'on considère la solution décrite de l'état antérieur de la technique, il apparaît que si l'opération de clipage en tant que telle n'est pas correctement réalisée, l'embout de connexion ou autre, peut malgré tout rester accroché à la platine support, sans y être solidement accouplé. Autrement dit, l'opérateur, choisi pour effectuer un premier essai de passage de vitesses, ne s'apercevra pas que l'accouplement est mal réalisé et c'est seulement le conducteur qui, au bout de quelques kilomètres, constatera qu'il ne peut plus passer les vitesses, suit au désaccouplement du câble.

Pour remédier à ces inconvénients, une solution ressort, par exemple, de l'enseignement de la demande de brevet FR 2.927.961 dont le demandeur de la présente est également titulaire.

Selon l'enseignement de cette demande de brevet, un embout de connexion est engagé verticalement selon un mouvement de haut en bas, dans une échancrure que présente la platine. Le fond de l'échancrure présente deux gâchettes montées avec capacité de pivotement en regard l'une de l'autre. Les gâchettes sont asservies par un organe apte à être déclenché sous l'effet de l'introduction de l'embout pour provoquer le pivotement par rapprochement des gâchettes qui coopèrent avec des agencements de retenue de l'embout, en vue de son blocage dans le fond de l'échancrure.

Une autre solution ressort du document FR 2.936.852 appartenant également au demandeur. Selon cette solution, l'embout de connexion est introduit coaxialement dans une ouverture que présente la platine. L'embout est équipé d'une bague ouverte montée dans une gorge, en combinaison avec des agencements pour permettre, sous l'effort d'introduction coaxial, l'engagement dudit embout dans l'ouverture, suite à une diminution du diamètre de la bague. Après passage de l'ouverture, la bague revient à son diamètre initial correspondant à une position de verrouillage, en combinaison avec un épaulement de l'embout qui fait office de butée.

A partir de cet état de la technique, l'invention propose une autre solution améliorant encore le verrouillage de l'embout, de la douille ou autre élément de connexion du câble par rapport à la platine avec toujours pour objectif que, si la connexion n'est pas correctement effectuée, l'élément de connexion échappe automatiquement à la platine support lors des premiers essais par l'opérateur des passages des vitesses.

Pour résoudre un tel problème, il a été conçu et mis au point un ensemble comprenant un élément de guidage solidaire d'au moins une gaine de câble, et une platine support permettant l'accouplement de cet élément de guidage dans la platine support. Selon l'invention, l'élément de guidage présente, en alignement, deux crochets opposés dont l'un est destiné à être positionné angulairement en appui et en butée dans un décrochement formé dans la platine support, tandis que l'autre crochet est apte à prendre appui sur un organe élastique que présente ladite platine pour déclencher le pivotement d'un verrou basculant qui vient coopérer avec ledit autre crochet, sous un effet de basculement, dudit élément de guidage correspondant à une position d'accouplement avec la platine support.

Pour résoudre le problème posé d'assurer l'accouplement en tant que tel, le verrou basculant est monté sur un axe en bout de la platine et assujetti à un ressort de rappel en position de fermeture à l'encontre de l'organe élastique de ladite platine qui maintient ledit verrou en position ouverte.

Pour résoudre le problème posé de maintenir le verrou basculant en position armée, l'organe élastique de la platine est une lame ressort rendue solidaire, à l'une de ses extrémités, de la partie d'appui de la platine formant le décrochement coopérant avec l'un des crochets, l'autre extrémité de ladite lame maintenant le verrou basculant en position ouverte.

Selon d'autres caractéristiques, la lame est orientée perpendiculairement à l'axe de pivotement du verrou basculant. Les deux crochets sont constitués par deux languettes équerrées orientées selon deux sens opposés. Le décrochement de la platine présente une section transversale doublement équerrée pour enserrer le crochet.

Compte tenu des caractéristiques à la base de l'invention, la platine présente, en amont du décrochement et en prolongement de ce dernier, une zone d'appui et de centrage pour le crochet correspondant.

Le verrouillage de l'élément de guidage, en vue de son immobilisation, s'effectue par un engagement angulaire dudit élément et un appui contre le décrochement de la platine de l'un de ses crochets, puis par un basculement vers le bas dudit élément, de sorte que l'autre crochet prend appui sur la lame ressort provoquant, d'une manière concomitante, le pivotement en position de fermeture du verrou qui vient en appui contre ledit autre crochet.

Comme indiqué, l'invention trouve une application avantageuse dans le secteur technique de l'automobile. Dans ce but, la platine est fixée au niveau d'une boîte de vitesse d'un véhicule automobile, tandis que l'élément de guidage constitue un embout de gaine d'un câble pour le passage et/ou la sélection des vitesses.

Pour résoudre le problème posé de désaccoupler, si nécessaire, le câble de la platine support, le verrou basculant présente, à sa base, une fente pour l'engagement d'un outil du type tournevis, pour réarmer ledit verrou en position d'ouverture en exerçant un appui sur la lame ressort.

L'invention est exposée ci-après plus en détail à l'aide des figures des dessins annexés dans lesquels :

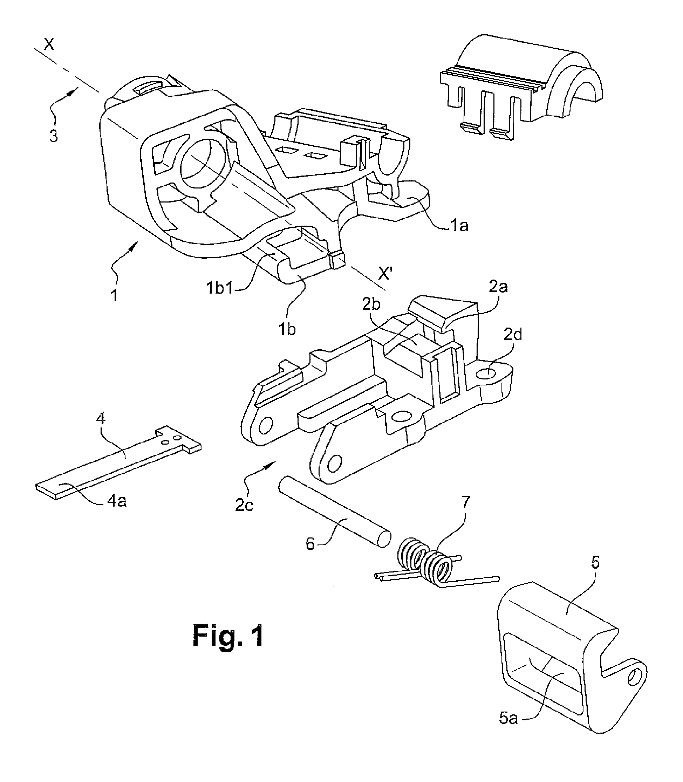

- la figure 1 est une vue en perspective montrant, avant accouplement, l'élément de guidage et de connexion du ou des câbles et de la platine support dont les parties constitutives sont représentées avant montage ;

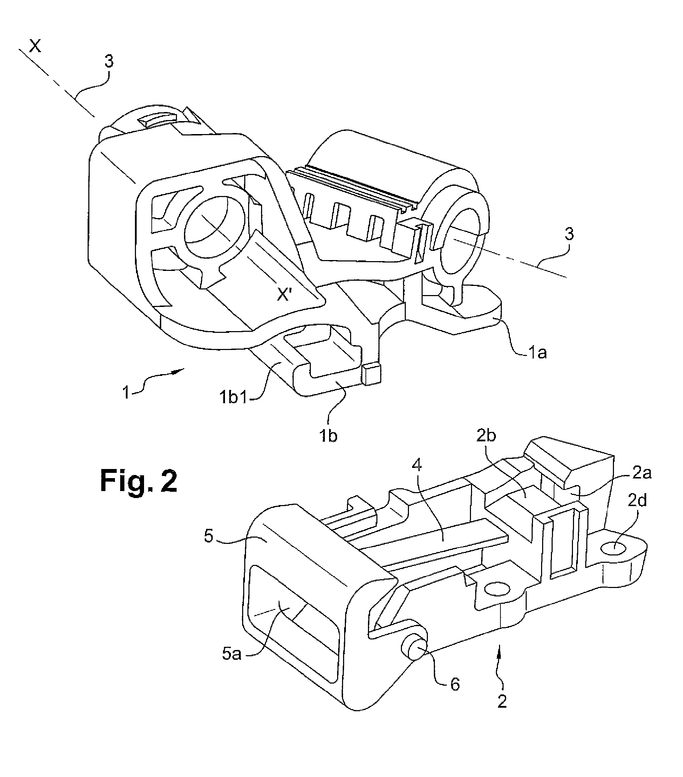

- la figure 2 est une vue correspondant à la figure 1 après montage des parties constitutives de la platine support ;
- les figures 3, 4 et 5 montrent le principe d'accouplement de l'élément de connexion du ou des câbles par rapport à la platine selon les caractéristiques du dispositif selon l'invention ;
- la figure 6 est une vue en perspective en position d'accouplement de l'élément de connexion avec la platine.

Comme indiqué, l'invention concerne un dispositif d'accouplement d'un élément de guidage et de connexion (1) dans une platine support (2). L'élément de guidage et de connexion (1) est rendu solidaire par tout moyen connu et approprié, de la gaine d'un ou de plusieurs câbles, symbolisés par le trait mixte (3).

Le dispositif trouve une application avantageuse dans le domaine de l'automobile et plus particulièrement de la transmission par câbles pour la commande du passage ou de la sélection des vitesses. Dans ce but, la platine (2) présente des agencements (2d) pour être fixée par tout moyen connu et approprié sur une partie de la boîte de vitesses. L'élément de connexion (1) présente, en alignement, deux crochets (1a) et (1b). Ces deux crochets sont constitués par deux languettes équerrées orientées selon deux sens opposés. Le crochet (1b) peut présenter un talon (1b1).

Le crochet (1a) est destiné à être positionné en appui et en butée dans un décrochement (2a) formé dans la platine support (2). Ce décrochement (2a) présente une section transversale doublement équerrée pour enserrer, comme il sera indiqué dans la suite de la description, l'extrémité libre du crochet (1a). En amont du décrochement (2a), la platine support (2) présente une zone (2b) pour le guidage du crochet (1a).

L'autre crochet (1b) est destiné à prendre appui sur un organe élastique (4) que présente la platine (2) pour déclencher le pivotement d'un verrou basculant (5) qui vient coopérer avec ledit crochet (1b) sous un effet de basculement vers le bas de l'élément de connexion (1) correspondant à une position d'accouplement avec la platine support (2), comme il sera indiqué dans la suite de la description. Le verrou basculant (5) est monté en bout de la platine (2), à l'opposé du décrochement (2a) sur un axe d'articulation (6) monté, par exemple, dans une partie de la platine (2) faisant office de chape (2c). L'axe de pivotement (6) du verrou (5) est assujetti à un ressort de rappel (7) en position de fermeture à l'encontre de l'organe élastique (4) qui est déterminé pour maintenir le verrou (5) en position ouverte.

L'organe élastique (4) est constitué par une lame ressort, rendue solidaire à l'une de ses extrémités au niveau de la partie d'appui (2b) de la platine. L'extrémité libre (4a) de la lame (4) maintient, comme indiqué, le verrou (5) en position ouverte à l'encontre du ressort de rappel (7) correspondant, par conséquent, à une position dite « armée » du verrou (5). La lame (4) est orientée perpendiculairement à l'axe de pivotement (6) du verrou (5)

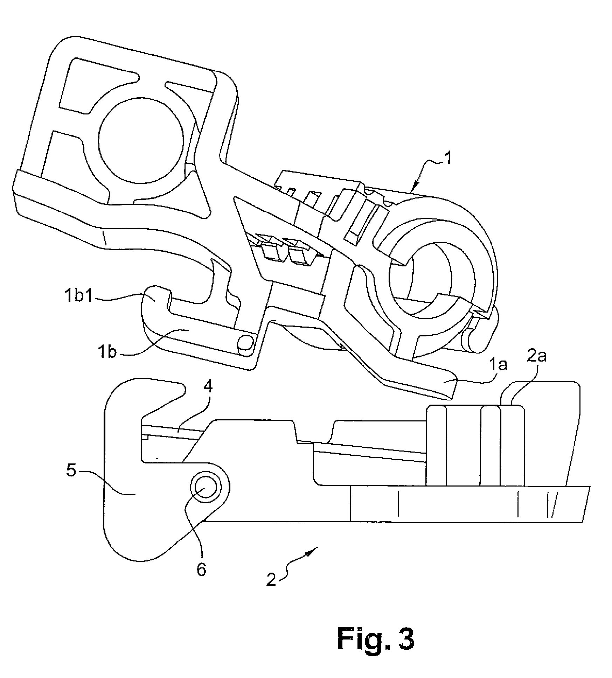

Le fonctionnement du dispositif en vue de l'accouplement du ou des câbles équipés du ou des éléments de connexion (1) par rapport à la platine (2), s'effectue dans les conditions ci-après décrites, en référence aux figures 3, 4 et 5.

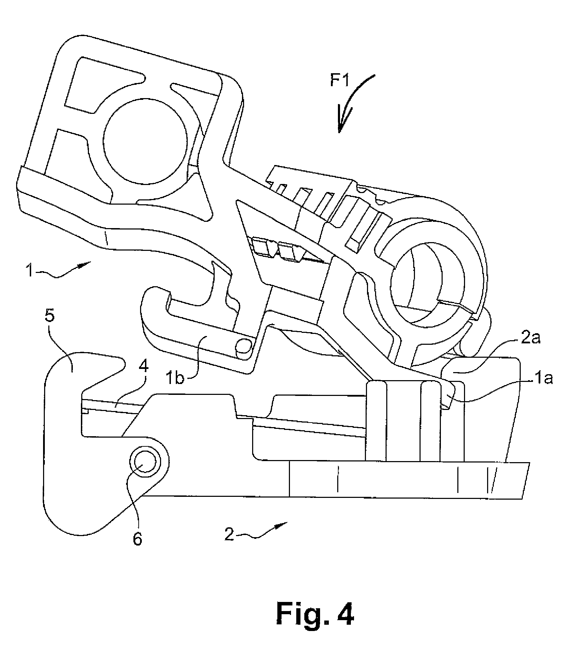

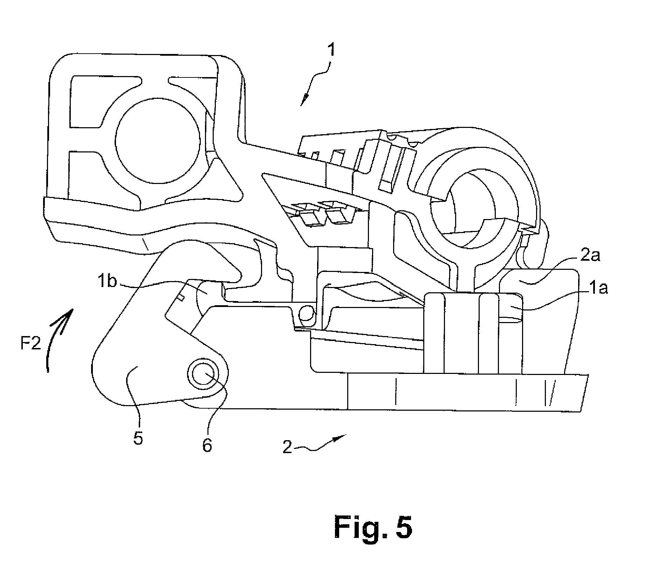

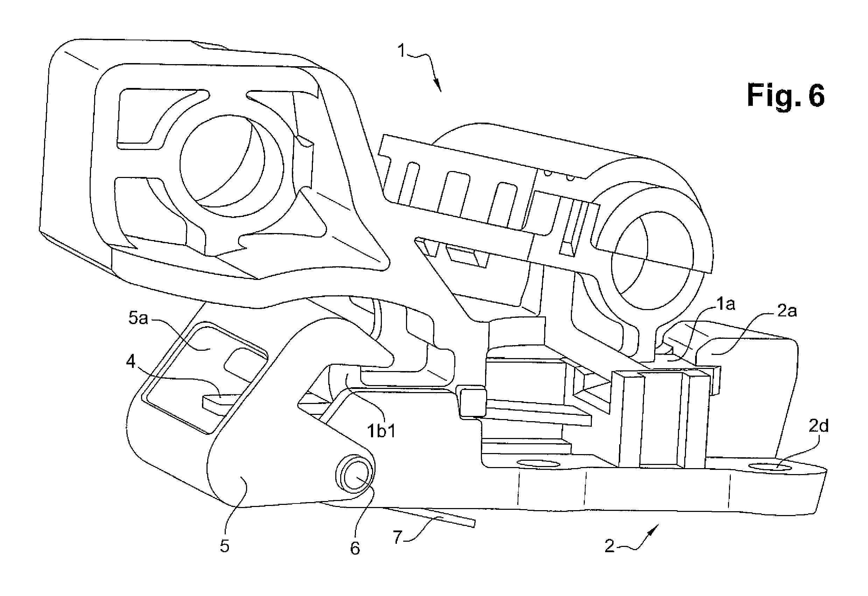

Comme le montrent les figures 3 et 4, l'élément de connexion (1) avec le ou les câbles, est présenté angulairement en vue de l'engagement du crochet (1a) dans la zone de guidage (2b) pour être engagé en appui contre le décrochement (1a). L'élément de connexion (1) est ensuite basculé vers le bas (flèche F1), de sorte que le crochet (1b) vient en appui contre la lame (4). Sous cet effet d'appui (F1), la lame (4) est escamotée libérant, par conséquent, le verrou (5) lequel, sous l'effet de détente du ressort de rappel (7) de l'axe de pivotement (6) pivote angulairement (flèche F2) pour venir emprisonner le crochet (1b) derrière le talon (1b1) (figure 5). Il en résulte l'immobilisation et le verrouillage de l'élément de connexion (1) dans la platine (2) (figure 6).

Il ressort de ces dispositions que, si l'élément de connexion (1) n'est pas correctement verrouillé dans la platine, un effort de traction exercé sur le ou les câbles provoquera immédiatement le désaccouplement de l'élément de connexion (1) par rapport à la platine (1) lors du premier essai par l'opérateur.

A cet égard, il convient de noter, d'une manière préférée, que l'élément de connexion (1) peut être agencé pour que la fixation des gaines ou des câbles soit disposée angulairement et notamment perpendiculairement à l'axe longitudinal x - x' de la platine, permettant audit élément (1) d'échapper encore plus facilement la platine (2), lorsque le verrouillage n'est pas réalisé correctement.

Après verrouillage total et immobilisation de l'élément de connexion (1) dans la platine (1), dans les conditions indiquées précédemment, il est possible, si nécessaire, de désaccoupler l'embout de connexion (1).

Pour cela, il suffit d'engager au-travers d'une fente (5a) que présente le verrou (5), un outil quelconque, notamment la lame d'un tournevis, afin de réarmer ledit verrou (5) en position d'ouverture, en exerçant un appui sur la lame ressort (4).

Les avantages ressortent bien de la description.

## Revendications

1. Ensemble comprenant un élément de guidage (1) solidaire d'au moins une gaine de câble et une platine support (2) permettant l'accouplement de cet élément de guidage dans la platine support (2) **caractérisé en ce que** l'élément de guidage (1) présente en alignement deux crochets opposés (1a, 1b)
dont l'un (1a) est destiné à être positionné angulairement en appui et en butée dans un décrochement (2a) formé dans la platine support (2), tandis que l'autre crochet (1b) est apte à prendre appui sur un organe élastique (4) que présente ladite platine (2) pour déclencher le pivotement d'un verrou basculant (5) qui vient coopérer avec ledit autre crochet (1b), sous un effet de basculement dudit élément de guidage (1) correspondant à une position d'accouplement avec la platine support (2).

2. Ensemble selon la revendication 1, **caractérisé en ce que** le verrou basculant (5) est monté sur un axe (6) en bout de la platine (2) et assujetti à un ressort de rappel (7) en position de fermeture à l'encontre de l'organe élastique (4) de ladite platine (2) qui maintient ledit verrou (5) en position ouverte.

3. Ensemble selon l'une des revendications 1-2, **caractérisé en ce que** l'organe élastique (4) de la platine (2) est une lame ressort rendue solidaire, à l'une de ses extrémités, de la partie d'appui de la platine (2) formant le décrochement (2a) coopérant avec le crochet (1a), l'autre extrémité de ladite lame (4) maintenant le verrou basculant (5) en position ouverte.

4. Ensemble selon la revendication 3, **caractérisé en ce que** la lame (4) est orientée perpendiculairement à l'axe de pivotement (6) du verrou basculant (5).

5. Ensemble selon l'une des revendications 1-4, **caractérisé en ce que** les deux crochets (1a) et (1b) sont constitués par deux languettes équerrées orientées selon deux sens opposés.

6. Ensemble selon l'une des revendications 1-5, **caractérisé en ce que** le décrochement (2a) de la platine (2) présente une section transversale doublement équerrée pour enserrer le crochet (1a).

7. Ensemble selon l'une des revendications 1-6, **caractérisé en ce que** la platine (2) présente, en amont du décrochement (2a) et en prolongement de ce dernier, une zone d'appui et de centrage (2b) pour le crochet correspondant (1a).

8. Ensemble selon l'une des revendications 3-7, **caractérisé en ce que** le verrouillage de l'élément de guidage (1) en vue de son immobilisation dans la platine (2), s'effectue par un engagement angulaire dudit élément (1) et en appui contre le décrochement (2a) de la platine (2) de l'un de ses crochets (1a), puis par un basculement vers le bas dudit élément (1), de sorte que l'autre crochet (1b) prend appui sur la lame ressort (4) provoquant, d'une manière concomitante, le pivotement en position de fermeture du verrou (5) qui vient en appui contre ledit autre crochet (1b).

9. Ensemble selon l'une des revendications 1-8, **caractérisé en ce que** le verrou basculant (5) présente, à sa base, une fente (5a) pour l'engagement d'un outil du type tournevis, pour réarmer ledit verrou (5) en position d'ouverture en exerçant un appui sur la lame ressort (4).

10. Ensemble selon l'une des revendications 1-9, **caractérisé en ce que** la platine (2) est fixée au niveau d'une boîte de vitesses ou d'une commande de boîte de vitesses d'un véhicule automobile, tandis que l'élément de guidage (1) constitue un embout de gaine d'un câble pour le passage et/ou la sélection des vitesses.

## Patentansprüche

1. Struktur mit einem Führungselement (1), das fest mit wenigstens einem Kabelmantel verbunden ist, und mit einer Trägerplatine (2), die die Kopplung dieses Führungselements in der Trägerplatine (2) zulässt, **dadurch gekennzeichnet, dass** das Führungselement (1) eine Fluchtlinie von zwei gegenüberliegenden Haken (1a, 1b) aufweist, von denen eines (1a) dazu bestimmt ist, winkelförmig aufstützend und im Anschlag in eine Abweichung (2a) positioniert zu werden, der in der Trägerplatine (2) gebildet ist, während der andere Haken (1b) geeignet ist, sich auf ein elastisches Organ (4) aufzustützen, das die genannte Platine (2) aufweist, um das Schwenken eines Kippriegels (5) auszulösen, der mit dem genannten anderen Haken (1b) unter einer Kippwirkung des genannten Führungselements (1) zusammenwirkt, die einer Kopplungsposition mit der Trägerplatine (2) entspricht.

2. Struktur gemäß Anspruch 1, **dadurch gekennzeichnet, dass** der Kippriegel (5) auf einer Achse (6) am Ende der Platine (2) montiert und von einer Rückholfeder (7) in geschlossener Position gegen das elastische Organ (4) der genannten Platine (2) befestigt ist, die den genannten Riegel (5) in offener Position festhält.

3. Struktur gemäß Anspruch 1 - 2, **dadurch gekennzeichnet, dass** das elastische Organ (4) der Platine (2) ein Federblatt ist, das an einem ihrer Enden mit dem Aufstützteil der Platine (2) fest befestigt ist, die die mit dem Haken (1a) zusammenwirkenden Abweichung (2a) bildet, wobei das andere Ende des genannten Blattes (4) den Kippriegel (5) in offener Position festhält.

4. Struktur gemäß Anspruch 3, **dadurch gekennzeichnet, dass** das Blatt (4) senkrecht zur Schwenkachse (6) des Kippriegels (5) ausgerichtet ist.

5. Struktur gemäß Anspruch 1-4, **dadurch gekennzeichnet, dass** die zwei Haken (1a) und (1b) durch zwei eingewinkelte Zungen gebildet sind, die gemäß zwei entgegen gesetzten Richtungen ausgerichtet sind.

6. Struktur gemäß Anspruch 1 - 5, **dadurch gekennzeichnet, dass** die Abweichung (2a) der Platine (2) einen doppelt eingewinkelten Querschnitt aufweist, um den Haken (1a) zu umspannen.

7. Struktur gemäß Anspruch 1 - 6, **dadurch gekennzeichnet, dass** die Platine (2) vor der Abweichung (2a) und in der Verlängerung derselben einen Aufstütz- und Zentrierungsbereich (2b) für den entsprechenden Haken (1a) aufweist.

8. Struktur gemäß Anspruch 3 - 7, **dadurch gekennzeichnet, dass** die Verriegelung des Führungselements (1) zwecks seiner Immobilisierung in der Platine (2) durch ein winkelförmiges Eingreifen des genannten Elements (1) und aufstützend gegen die Abweichung (2a) der Platine (2) eines ihrer Haken (1a) und dann durch ein Kippen des genannten Elements (1) nach unten derart erfolgt, dass sich der andere Haken (1b) auf das Federblatt (4) aufstützt und damit gleichzeitig das Schwenken des Riegels (5), der gegen den genannten anderen Haken (1b) zum Aufstützen kommt, in die Verschlussposition hervorruft.

9. Struktur gemäß Anspruch 1 - 8, **dadurch gekennzeichnet, dass** der Kippriegel (5) an seiner Basis einen Schlitz (5a) für das Eingreifen eines Werkzeugs vom Typ Schraubendreher aufweist, um den genannten Riegel (5) durch Ausüben eines Aufstützens auf das Federblatt (4) in die Öffnungsposition zurückzubringen.

10. Struktur gemäß Anspruch 1 - 9, **dadurch gekennzeichnet, dass** die Platine (2) an einem Schaltgetriebe oder einer Steuerung eines Schaltgetriebes eines Kraftfahrzeugs befestigt ist, während das Führungselement (1) ein Ansatzstück eines Kabelmantels für den Durchgang und / oder die Auswahl der Gänge bildet.

## Claims

1. Assembly comprising a guide element (1) secured to at least one cable sheath and a support mount (2) for coupling said guide element in the support mount (2), **characterised in that** the guide element (1) has two opposed hooks (1a) and (1b) in alignment, one of which (1a) is intended to be positioned angularly so as to bear and butt in a recess (2a) formed in the support mount (2), while the other hook (1b) is designed to bear on an elastic member (4) belonging to said mount (2) so as to trigger the pivoting movement of a tilting latch (5) which engages with said other hook (1b), under a tilting effect of said guide element (1) that corresponds to a position of coupling with the support mount (2).

2. Assembly according to claim 1, **characterised in that** the tilting latch (5) is mounted on a shaft (6) at the end of the mount (2) and subject to a spring (7) to return it to the closed position against the elastic member (4) of said mount (2) which keeps said latch (5) in an open position.

3. Assembly according to one of claims 1 to 2, **characterised in that** the elastic member (4) of the mount (2) is a spring-loaded blade secured, at one of its ends, to the bearing part of the mount (2) forming the recess (2a) engaging with the hook (1a), the other end of said blade (4) keeping the tilting latch (5) in the open position.

4. Assembly according to claim 3, **characterised in that** the blade (4) is positioned perpendicular to the pivot axis (6) of the tilting latch (5).

5. Assembly according to one of claims 1 to 4, **characterised in that** the two hooks (1a) and (1b) are formed by two squared tabs facing in two opposite directions.

6. Assembly according to one of claims 1 to 5, **characterised in that** the recess (2a) of the mount (2) has a T-squared cross-section to encompass the hook (1a).

7. Assembly according to one of claims 1 to 6, **characterised in that** the mount (2) has, upstream of the recess (2a) and as an extension thereof, a bearing and centring area (2b) for the corresponding hook (1a).

8. Assembly according to one of claims 3 to 7, **characterised in that** the locking of the guide element (1), with a view to immobilising it in the mount (2), is achieved by an angular engagement of the said element (1) and a bearing against the recess (2a) of the mount (2) by one of its hooks (1a), then by a downward tilting of said element (1), so that the other hook (1b) bears on the spring-loaded blade (4) causing, concurrently, the pivoting into the closed position of the latch (5) which bears against the said other hook (1b).

9. Assembly according to one of claims 1 to 8, **characterised in that** the tilting latch (5) has, at its base, a slot (5a) for engaging a tool such as a screwdriver, in order to rearm the said latch (5) in an open position by bearing down on the spring-loaded blade (4).

10. Assembly according to one of claims 1 to 9, **characterised in that** the mount (2) is fixed to a motor vehicle gearbox or to a control of a gearbox, whereas the guide element (1) forms a sheath end-piece of a cable for shifting and/or selecting gears.
